# EUROPEAN PATENT SPECIFICATION

(11) **EP 1 454 670 B1**
(45) Date of publication and mention of the grant of the patent: **14.05.2008**
(21) Application number: 04250061.1
(22) Date of filing: 08.01.2004
(51) Int. Cl.: B01J 19/00, B01J 19/02, F28F 21/04

(54) **Trichlorosilane production in apparatus comprising SiC parts**
Trichlorsilanherstellung in einer mit SiC-Teilen ausgestatteter Vorrichtung
Production de trichlorosilane dans un dispositif comprenant des détails en SiC

(30) Priority: 03.03.2003 US 378360
(43) Date of publication of application: 08.09.2004
(73) Proprietor: HEMLOCK SEMICONDUCTOR CORPORATION, Hemlock Michigan 48626 (US)
(72) Inventor: Agrawal, Manoj, Midland Michigan 48642 (US); Pippenger, Robert, Midland Michigan 48642 (US); Bauer, Dana, Saginaw Michigan 48603 (US)
(74) Representative: Kyle, Diana

(56) References cited:
- EP-A- 0 579 942
- WO-A-03/031332
- US-A- 4 926 001
- US-A- 4 971 770
- US-A- 4 973 777
- US-A- 5 037 619
- US-A- 5 126 112
- US-A- 5 906 799

## Description

This invention relates to making use of an improved apparatus for contacting gases at high temperature for hydrogenation of tetrachlorosilane.

In a process for preparing semiconductor-grade silicon, silicon may be deposited on a heated element by reducing trichlorosilane gas in the presence of hydrogen. However, this process may suffer from the drawback that a significant portion of the trichlorosilane gas is de-hydrogenated to form by-product tetrachlorosilane. It is desirable to convert this by-product tetrachlorosilane back into trichlorosilane, which may be recycled to the deposition process.

Various processes for hydrogenation of tetrachlorosilane (converting tetrachlorosilane to trichlorosilane) are known in the art. For example, tetrachlorosilane may be reacted with hydrogen at a temperature of 600 to 1200 °C in an equilibration reaction. Trichlorosilane, other by-product chlorosilanes, and HCl may be formed. Reactors for the hydrogenation of tetrachlorosilane should be able to withstand the high temperatures and corrosive nature of the materials such as chlorosilanes and HCl in the process. Suitable reactors for converting tetrachlorosilane to trichlorosilane may comprise a pressurizable shell, a thermal insulator surrounded by the pressurizable shell, a heating element surrounded by the thermal insulator, and a reaction chamber surrounded by the heating element for reacting the hydrogen gas with the tetrachlorosilane.

In such reactors, it is often not possible to entirely confine the hydrogen and tetrachlorosilane fed to the reaction chamber. These gases may leak through seals and joints in the reactor into surrounding spaces containing insulation and other structural elements. When hydrogen gas contacts these structural elements, a number of detrimental reactions are possible, depending on the composition of the structural element and temperature at the contact location. For example, at temperatures of 400 to 1000 °C, hydrogen may react with carbon and carbon-based materials of construction, such as heating elements and thermal insulators, to form methane. The methane may cause contamination in the trichlorosilane product. At temperatures above 800 °C, in the presence of hydrogen and chlorosilanes, carbon and carbon-based materials may convert to silicon carbide with the liberation of HCl. This reaction may degrade the physical integrity of the carbon and carbon-based elements. Furthermore, silicon may be deposited on high temperature parts in the reactor. In an atmosphere containing hydrogen and tetrachlorosilane where the concentration of hydrogen is greater than 85 mole %, the tetrachlorosilane may be reduced to elemental silicon and deposited on high-temperature parts of the reactor. A buildup of silicon in the reactor may inhibit heat transfer within the reactor as well as make parts of the reactor brittle and difficult to disassemble. Also, hydrogen gas has a high thermal conductivity and its presence in the space between the reaction chamber and the pressurizable shell may cause increased heat loss from the reactor and increased shell temperature in comparison to gases with lower thermal conductivity.

In existing reactors for converting tetrachlorosilane to trichlorosilane, carbon and carbon based materials, such as graphite, are used as materials of construction. For example, rigid graphite felt in combination with a flexible graphite platform may be used as thermal insulators in reactors for hydrogenation of chlorosilanes. Rigid graphite felt is a porous carbon fiber carbon bonded material with insulating properties. However, rigid graphite felt may be susceptible to attack by high temperature hydrogen, which produces carbon compounds. These carbon compounds may contaminate silicon produced by the deposition process, as described above.

Heating elements have been prepared using a carbon fiber composite (CFCC) coated with silicon carbide. CFCC may consist of layers of carbon fibers that are cured to from a plastic like "green" body and then infiltrated with a carbon containing liquid or gas to form a carbon matrix. The material may then be further processed to graphitize the carbon. The resulting material may be coated with silicon carbide using a chemical vapor deposition process. The resulting coated material is the composite. A full cylindrical unit may be formed as a single, monolithic part or constructed from multiple parts connected together with fasteners such as screws. Failure may be caused by chemical reaction of the carbon matrix, fibers, or both, with chlorosilanes or hydrogen. Cylinders comprising graphite blocks coated with a thin layer of silicon carbide by a chemical vapor deposition process have also been used.

Carbon and carbon based materials of construction, which are coated with silicon carbide may suffer from the drawback that it is difficult to achieve a uniform coating of silicon carbide over some surfaces of different parts. Furthermore, over time, chlorosilane gas, hydrogen gas, or both may penetrate the silicon carbide coating through cracks or through areas of thinner coating and cause degradation of the carbon and carbon based materials underneath. As this occurs, increasing amounts of carbon compounds that contaminate silicon are produced, and ultimately, the part may fail. Therefore, there is a continuing need to design process equipment with longer life.

US 5,422,088 and US 5,906,799 describe processes and reactors for contacting hydrogen gas and tetrachlorosilane. Certain components of the reactor may be formed from silicon carbide coated carbon, silicon carbide coated graphite or silicon carbide coated carbon fiber composites.

EP 0 579 942 describes reformer tubes for use in reformer reactors including ceramic tubes. Preferably the ceramic tube is made from alpha silicon carbide.

This invention relates to an apparatus suitable for use in contacting high temperature gases, such as tetrachlorosilane and hydrogen. At least one part of the apparatus that contacts a high temperature gas consists of a silicon carbide based material of construction.

All amounts, ratios, and percentages are by weight unless otherwise indicated. The following is a list of definitions, as used herein.

### Definitions

### "A" and "an" each mean one or more.

"CMC" means a ceramic matrix composite comprising a silicon carbide matrix reinforced with carbon fibers or silicon carbide fibers, or a combination thereof. CMC may optionally be infiltrated with silicon or silicon carbide. CMC may be produced, for example, as described in U.S. Patents 4,294,788 and 5,738,908.

"Ceramic SiC" means a silicon carbide produced by a process comprising processing powdered silicon carbide at high temperature. Ceramic SiC may optionally be further processed by densifying or coating, or a combination thereof. Ceramic SiC may be densified by infiltration with molten or vaporized silicon, for example by the process described in EP 0 532 985. Ceramic SiC may be coated by a chemical vapor deposition process. Ceramic SiC includes, but is not limited to, hot pressed silicon carbide, reaction bonded silicon carbide, recrystallized silicon carbide, and sintered silicon carbide. Hot pressed silicon carbide may be produced, for example, by compacting powdered silicon carbide using heat and pressure. Hot pressed silicon carbide may be produced, for example, as described in U.S. Patents 4,108,929 and 5,354,536. Reaction bonded silicon carbide may be produced, for example, by processing powdered silicon carbide with carbon and molten silicon. Reaction bonded silicon carbide may be produced, for example, as described in U.S. Patent 3,495,939 and EP 0 532 985. Recrystallized silicon carbide may be produced, for example, as described in U.S. Patents 5,840,639 and 5,925,310. Sintered silicon carbide may be produced, for example, by processing powdered silicon carbide with a sintering agent and a binder or resin. Sintered silicon carbide may be produced, for example, as described in U.S. Patents 5,082,597 and 5,656,218.

"CVD SiC" means a silicon carbide produced by a process comprising chemical vapor deposition of silicon carbide on a mandrel, such as graphite, and thereafter removing the mandrel. CVD SiC may be produced, for example, as described in U.S. Patents 5,374,412 and 5,604,151.

"SiC Insulation" means a silicon carbide produced by a process comprising infiltrating a fibrous or porous, carbon or carbon based, material of construction with a silicon-containing source gas to provide individual fibers or pores with a coating of silicon carbide, or to convert individual fibers to silicon carbide, or combinations thereof; thereby yielding a silicon carbide, which as compared to CMC is relatively thermally insulating. SiC Insulation may be produced, for example, as described in U.S. Patent 4,481,179.

"SiC-based" means silicon carbide-based and includes but is not limited to CMC, Ceramic SiC, CVD SiC, and SiC Insulation.

### Apparatus

Although in the past carbon-based parts and carbon-based parts coated with silicon carbide have been used in reactors suitable for contacting high temperature gases, such as reactors for hydrogenating tetrachlorosilane, SiC-based parts suitable for use in such reactors have not been available until now due to difficulties in the manufacture of SiC-based parts of sufficient size and complex geometry. The inventors surprisingly found benefits by replacing carbon and carbon-based reactor parts, even such parts coated with silicon carbide, with SiC-based parts in a reactor used for hydrogenating tetrachlorosilane. The benefits include that such replacement may reduce the amounts of carbon containing impurities in the trichlorosilane product upon initial installation of the SiC-based part, as compared to carbon-based parts and carbon-based parts coated with silicon carbide. Such replacement may also reduce the amounts of carbon containing impurities in the trichlorosilane product over time, as compared to carbon-based parts and carbon-based parts coated with silicon carbide. Further benefits include that useable lifetimes of SiC-based parts may increase as compared to carbon-based parts and carbon-based parts coated with silicon carbide.

This invention relates to a method which uses an apparatus that is suitable for contacting high temperature gases, e.g., hydrogen and tetrachlorosilane, where at least one part in the apparatus, which contacts a high temperature gas, consists of a material of construction selected from SiC and CVD SiC. Suitable designs are known in the art. For example, the portions of U.S. Patents 4,536,642; 5,126,112; 5,422,088; and 5,906,799 disclosing designs of reactors suitable for contacting high temperature gases, and parts for use in said reactors.

A method for producing a product comprising trichlorosilane which comprises:
passing a gas mixture comprising hydrogen and tetrachlorosilane through an apparatus which comprises:
   a reactor (100) comprising
      i) a pressurizable shell (101),
      ii) a thermal insulator (102) surrounded by the pressurizable shell (101),
      iii) a heating element (106) surrounded by the thermal insulator (102), and
      iv) a reaction chamber (107) surrounded by the heating element (106), wherein the reaction chamber (107) comprises
         a) a diverter (114) forming the top of the reaction chamber (107),
         b) an outer cylinder (112) surrounded by the heating element (106), and
         c) an inner cylinder (113) surrounded by the outer cylinder (112), and
         d) a fastener (115) connecting the diverter (114) to the outer cylinder (112);
forming a gas flow path between the outer cylinder (112) and the inner cylinder (113);
reacting the gas mixture at a high temperature in a reaction zone formed in the center of the inner cylinder (113); and where at least one of the outer cylinder (112), the inner cylinder (113), the diverter (114), and the fastener (115) consists of a material of construction selected from Ceramic SiC and CVD SiC.

The reactor may further comprise an outer chamber between the pressurizable shell and the thermal insulator. The reactor may be mounted to a heat exchanger. The heat exchanger may be the same as or similar to those heat exchangers disclosed in U.S. Patents 2,821,369; 3,250,322; and 3,391,016. The portions of U.S. Patents 2,821,369; 3,250,322; and 3,391,016 disclosing designs of heat exchangers and parts for use in these heat exchangers are hereby incorporated by reference. Alternatively, the heat exchanger, or a part thereof, may comprise a SiC-based material of construction, such as CMC or Ceramic SiC, or combinations thereof.

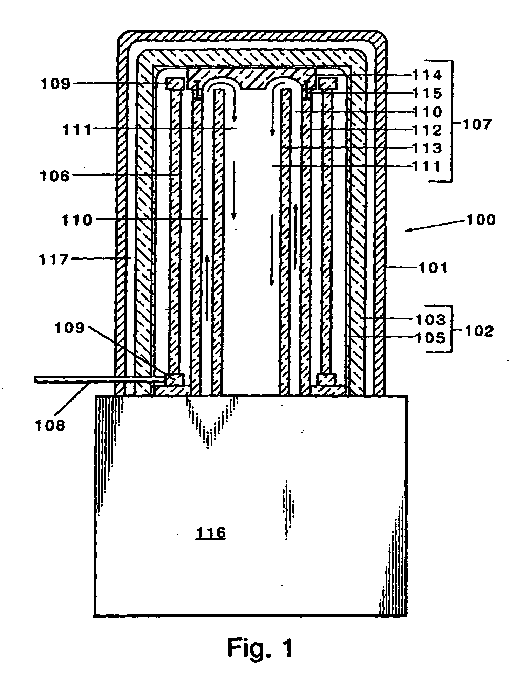

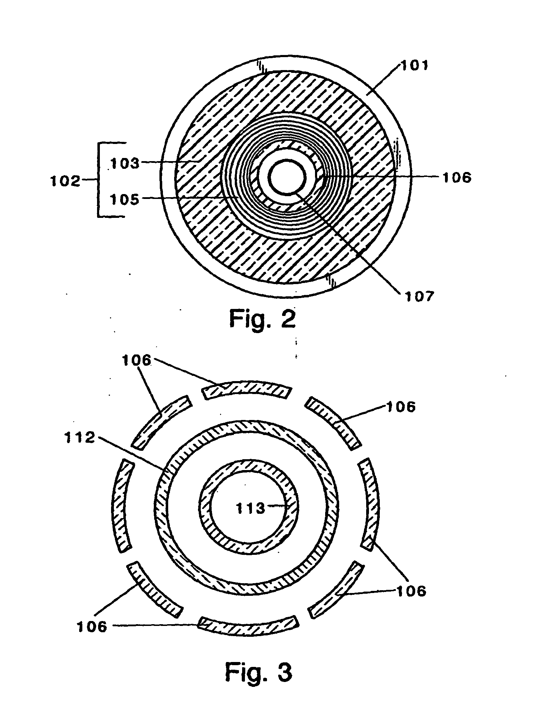

Figure 1 shows a cutaway lateral view of an embodiment of an apparatus for contacting high temperature gases of this invention. The reactor 100 comprises a pressurizable shell 101. The pressurizable shell 101 may comprise a stainless steel. The inner surface of pressurizable shell 101 is thermally insulated from heating element 106 by thermal insulator 102. Thermal insulator 102 comprises insulation layer 103 and heat shield 105. Thermal insulator 102 may be the same as or similar to the design described in U.S. Patent 5,126,112 and shown in Figure 2, described herein. Thermal insulator 102 may be formed from standard high temperature insulating materials, for example, flexible or rigid carbon or graphite felt and solid sheets of flexible graphite. Alternatively, thermal insulator 102 may comprise a SiC-based material, as described herein. One or more of the insulation layer 103 and the heat shield 105 may comprise a SiC-based material. The reactor 100 may further comprise an outer chamber 117 between the pressurizable shell and the insulation layer 103.

Heating element 106 may have a standard configuration, for example, one or more rods or panels positioned around the exterior of the reaction chamber 107 formed by outer cylinder 112, inner cylinder 113, diverter 114, and fasteners 115. Alternatively, heating element 106 may be a single, monolithic part. Heating element 106 may be formed from carbon, graphite, or a silicon carbide coated carbon composite. Alternatively, heating element 106 may be formed from a SiC-based material, such as CMC, or Ceramic SiC, exemplified by recrystallized silicon carbide, reaction bonded silicon carbide, and sintered silicon carbide.

Heating element 106 is electrically connected to electrode 108, which provides means for connecting to an external energy source (not shown). Heating element 106 is electrically insulated from the remainder of the reactor 100 by electrical insulators 109. Electrical insulators 109 may be formed from standard high temperature and chemically resistant insulating material, for example, fused silica or silicon nitride.

Heating element 106 surrounds the reaction chamber 107. In figure 1, the reaction chamber 107 has a dual wall design formed by two concentrically arrayed cylinders 112, 113, a diverter 114 and a fastener 115. Diverter 114 forms the top of the reaction chamber 107. Fasteners 115 fasten diverter 114 to outer cylinder 112. Outer cylinder 112, inner cylinder 113, diverter 114, and fasteners 115 may be formed from standard materials of construction for high temperature reactors, for example, carbon, graphite, silicon carbide coated carbon, and silicon carbide coated graphite; or from silicon carbide coated carbon fiber composites. Alternatively, one or more of outer cylinder 112, inner cylinder 113, diverter 114, and fasteners 115 may comprise a SiC-based material, such as Ceramic SiC or CVD SiC, alternatively Ceramic SiC. Fasteners 115 may comprise Ceramic SiC or CMC, alternatively Ceramic SiC. Suitable fasteners 115 may be threaded screws, or equivalents thereof available to one skilled in the art without undue experimentation.

The reactor 100 is mounted to heat exchanger 116, where the gases (*e*.*g*., hydrogen and tetrachlorosilane) fed to the reactor 100 are preheated before entering the gas flow path 110. These gases then flow through the gas flow path 110 of the reaction chamber 107, where additional heating occurs from heating element 106. The gases are diverted by diverter 114 to direct flow through the reaction zone 111. Heated gases exiting then pass through heat exchanger 116, transferring heat to the incoming feed gases. Heat exchanger 116 may be of standard design, for example, heat exchanger 116 may be the same as or similar to those heat exchangers disclosed in U.S. Patents 2,821,369; 3,250,322; and 3,391,016. Alternatively, heat exchanger 116 may comprise a SiC-based material, such as CMC, Ceramic SiC, CVD SiC, or a SiC-based material in combination with (*e*.*g*., coated with) another SiC-based material such as Ceramic SiC coated with CVD SiC.

One skilled in the art would be able to select a suitable design and suitable SiC-based materials of construction for one or more parts of the apparatus based on the disclosure herein. For example, outer cylinder 112, diverter 114, and fastener 115 may be formed from one monolithic piece of Ceramic SiC or combinations of Ceramic SiC with another SiC-based material, such as CVD SiC. Alternatively outer cylinder 112 and inner cylinder 113 may each be formed from more than one piece of a SiC-based material. Heat exchanger 116 may be formed from one monolithic piece of a SiC-based material, or heat exchanger 116 may be formed from more than one piece of a SiC-based material. Heating element 106 may be formed from one monolithic piece of Ceramic SiC. The reaction chamber 107 may have a single wall design. Furthermore, combinations of SiC-based materials may be used, for example one SiC-based material, such as Ceramic SiC, coated with another SiC-based material, such as CVD SiC, may be used to fabricate parts of the apparatus.

### Thermal Insulator

This invention further relates to a thermal insulator that may be used in the reactor described above. The thermal insulator comprises:
a) an insulation layer, and
   optionally b) a heat shield surrounded by the insulation layer, when present.

The insulation layer may consist of a SiC-based material of construction. The insulation layer may comprise SiC Insulation. When the heat shield is present, at least one of the heat shield and the insulation layer consists of a SiC-based material of construction.

The heat shield may comprise:
i) a sheet wrapped in a spiral, and
optionally ii) spacers between wraps of the sheet.

Alternatively, the heat shield may consists of a SiC-based material such as CMC or Ceramic SiC. Alternatively, the heat shield may be formed as one monolithic piece of a SiC-based material such as CMC or Ceramic SiC, or combinations thereof.

Figure 2 is a cross-sectional view of a reactor including a thermal insulator of this invention. The reactor comprises a pressurizable shell 101, as described for figure 1. The inner surface of pressurizable shell 101 is thermally insulated from heating element 106 by thermal insulator 102. Heating element 106 may have a standard configuration, for example, one or more rods or panels positioned around the exterior of the reaction zone 107. Heating element 106 may be formed from carbon, graphite, or a silicon carbide coated carbon composite. Alternatively, heating element 106 may be formed from a SiC-based material, such as CMC or Ceramic SiC.

Thermal insulator 102 comprises a heat shield 105 and insulation layer 103. Insulation layer 103 may comprise carbon-based rigid felt, as disclosed in U.S. Patent 5,126,112. Alternatively, insulation layer 103 may consists of a SiC-based material such as SiC Insulation.

The heat shield 105 comprises a continuous sheet wound in a spiral around the heating element 106. The heat shield 105 may further comprise spacers (not shown) between wraps. Alternatively, the heat shield 105 may consists of a SiC-based material such as CMC or Ceramic SiC. Alternatively, the heat shield 105 may be formed as one monolithic piece of a SiC-based material such as CMC or Ceramic SiC, or combinations thereof.

The thermal insulator 102 may alternatively be formed as a single, monolithic SiC-based part. One skilled in the art would be able to select a suitable thermal insulator design and suitable SiC-based materials of construction for one or more parts of the thermal insulator design based on the disclosure herein.

### Heating Element

This invention further relates to a heating element that may be used in the reactor described above. The heating element may have any design available to one of ordinary skill in the art without undue experimentation, such as the picket fence design shown in Figure 3. Figure 3 shows a heating element 106 in the reactor of figure 1. Heating element 106 surrounds an outer cylinder 112. The outer cylinder 112 surrounds an inner cylinder 113. Heating element 106 may comprise one or more rods or panels positioned around the outer cylinder 112. Heating element 106 may comprise carbon, graphite, or a silicon carbide coated carbon composite. Alternatively, heating element 106 may consists of a SiC-based material of construction, such as CMC or Ceramic SiC, or a combination thereof. Alternatively, the heating element may be formed of one monolithic piece of SiC-based material, such as Ceramic SiC, rather than rods or panels. Alternatively, heating element 106 may consist of CMC.

One skilled in the art would recognize that the heating element designs described above are exemplary and not limiting. One skilled in the art would be able to select a suitable heating element design and suitable SiC-based materials of construction for one or more parts of the heating element design based on the disclosure herein.

### Method of Use

This invention relates to a method of using the apparatus described above to prepare a product comprising trichlorosilane. The method comprises passing a gas mixture comprising hydrogen and tetrachlorosilane through the apparatus described above. The method may further comprise preheating the gas mixture in a heat exchanger prior to passing the gas mixture through the apparatus.

### Examples

These examples further illustrate the invention.

### Example 1 - SiC-Based Part

A Ceramic SiC part that is coated with a CVD SiC coating is installed in a reactor for the hydrogenation of tetrachlorosilane at Hemlock Semiconductor Corporation. After normal operation for 1000 hours, the part is removed. No changes in the base material or coating are visually observable before and after installation.

### Comparative Example 1 - Carbon-Based Part

The same part design as used in example 1 is fabricated from graphite and coated by chemical vapor deposition of SiC. This part is installed in reactor for the hydrogenation of tetrachlorosilane at Hemlock Semiconductor Corporation. After normal operation for 1000 hours, this part is removed. Degradation and corrosion are visible.

### DRAWINGS

Figure 1 is a cutaway lateral view of an apparatus of this invention.
Figure 2 is a partial cross-sectional view of a reactor including insulation of this invention.
Figure 3 is a partial cross-sectional view of a reactor including a heating element of this invention.

### Reference Numerals

- 100: reactor
- 101: pressurizable shell
- 102: thermal insulator
- 103: insulation layer
- 105: heat shield
- 106: heating element
- 107: reaction chamber
- 108: electrode
- 109: electrical insulators
- 110: gas flow path
- 111: reaction zone
- 112: outer cylinder
- 113: inner cylinder
- 114: diverter
- 115: fasteners
- 116: heat exchanger
- 117: outer chamber

## Claims

1. A method for producing a product comprising trichlorosilane which comprises:
passing a gas mixture comprising hydrogen and tetrachlorosilane through an apparatus which comprises:
a reactor (100) comprising
i) a pressurizable shell (101),
ii) a thermal insulator (102) surrounded by the pressurizable shell (101),
iii) a heating element (106) surrounded by the thermal insulator (102), and
iv) a reaction chamber (107) surrounded by the heating element (106), wherein the reaction chamber (107) comprises
a) a diverter (114) forming the top of the reaction chamber (107),
b) an outer cylinder (112) surrounded by the heating element (106), and
c) an inner cylinder (113) surrounded by the outer cylinder (112), and
d) a fastener (115) connecting the diverter (114) to the outer cylinder (112);
forming a gas flow path between the outer cylinder (112) and the inner cylinder (113);
reacting the gas mixture at a high temperature in a reaction zone formed in the center of the inner cylinder (113); and where at least one of the outer cylinder (112), the inner cylinder (113), the diverter (114), and the fastener (115) consists of a material of construction selected from Ceramic SiC and CVD SiC.

2. The method of claim 1, where the reactor (100) further comprises an outer chamber (117) between the pressurizable shell (101) and the thermal insulator (102).

3. The method of claim 1, wherein the apparatus further comprises a heat exchanger (116), where the reactor (100) is mounted to the heat exchanger (116).

4. The method of claim 1, wherein the apparatus further comprises a heat exchanger (116) comprising a silicon carbide-based material of construction, where the reactor is mounted to the heat exchanger (116).

5. The method of claim 1, wherein the apparatus further comprisies a heat exchanger (116), where the heat exchanger consists of CMC, Ceramic SiC, CVD SiC, or an SiC-based material coated with SiC Insulation, and where the reactor (100) is mounted to the heat exchanger (116).

6. The method of claim 1, where the thermal insulator (102) comprises:
a) an insulation layer (103), and
optionally b) a heat shield (105) surrounded by the insulation layer, when present.

7. The method of claim 1, where the insulation layer (103) comprises SiC Insulation.

8. The method of claim 1, where the heat shield (105) is present and the heat shield (105) comprises:
i) a sheet wrapped in a spiral, and
optionally ii) spacers between wraps of the sheet.

9. The method of claim 1, where the heat shield (105) is present and the heat shield (105) consists of CMC or Ceramic SiC, or a combination thereof.

10. The method of claim 1, where the diverter (114) consists of Ceramic SiC.

11. The method of claim 1, where the outer cylinder (112) consists of Ceramic SiC.

12. The method of claim 1, where the inner cylinder (113) consists of Ceramic SiC.

13. A method of claim 1, where the heating element consists of Ceramic SiC.

14. The method of claim 13, where the heating element has a picket fence design.

15. The method of claim 13, where the heating element is formed from one monolithic piece of the Ceramic SiC.

16. The method of any one of claims 1 to 15, further comprising preheating the gas mixture in a heat exchanger prior to passing the gas mixture through the apparatus.

## Patentansprüche

1. Verfahren zur Herstellung eines Gegenstands, umfassend Trichlorsilan, umfassend die Schritte:
Leiten eines Gasgemisches, umfassend Wasserstoff und Tetrachlorsilan, durch eine Vorrichtung, umfassend:
einen Reaktor (100), umfassend
i) eine druckbelastbare Hülle (101),
ii) einen thermischen Isolator (102), umgeben von der druckbelastbaren Hülle (101),
iii) ein Heizelement (106), umgeben von dem thermischen Isolator (102), und
iv) eine Reaktionskammer (107), umgeben von dem Heizelement (106),
wobei die Reaktionskammer (107) umfasst
a) eine Umlenkvorrichtung (114), welche den oberen Teil der Reaktionskammer (107) bildet,
b) einen äußeren Zylinder (112), umgeben von dem Heizelement (106), und
c) einen inneren Zylinder (113), umgeben von dem äußeren Zylinder (112), und
d) eine Befestigungsvorrichtung (115), um die Umlenkvorrichtung (114) mit dem äußeren Zylinder (112) zu verbinden;
wodurch ein Gasströmungsweg zwischen dem äußeren Zylinder (112) und dem inneren Zylinder (113) gebildet wird;
Reagieren des Gasgemisches in einer Reaktionszone, ausgebildet in der Mitte des inneren Zylinders (113), bei einer hohen Temperatur; und wobei wenigstens ein Teil, ausgewählt aus dem äußeren Zylinder (112), dem inneren Zylinder (113), der Umlenkvorrichtung (114) oder der Befestigungsvorrichtung (115) aus einem Material, ausgewählt aus Ceramic SiC und CVD SiC, hergestellt ist.

2. Verfahren nach Anspruch 1, wobei der Reaktor (100) außerdem eine äußere Kammer (117) zwischen der druckbelastbaren Hülle (101) und dem thermischen Isolator (102) umfasst.

3. Verfahren nach Anspruch 1, wobei die Vorrichtung außerdem einen Wärmetauscher (116) umfasst, wobei der Reaktor (100) an den Wärmetauscher (116) montiert ist.

4. Verfahren nach Anspruch 1, wobei die Vorrichtung außerdem einen Wärmetauscher (116) umfasst, welcher ein auf Siliciumcarbid basierendes Baumaterial umfasst, wobei der Reaktor an den Wärmetauscher (116) montiert ist.

5. Verfahren nach Anspruch 1, wobei die Vorrichtung außerdem einen Wärmetauscher (116) umfasst, wobei der Wärmetauscher aus CMC, Ceramic SiC, CVD SiC oder einem mit einem SiC Isolator beschichteten auf SiC basierendem Material besteht, und wobei der Reaktor (100) an den Wärmetauscher (116) montiert ist.

6. Verfahren nach Anspruch 1, wobei der thermische Isolator (102) umfasst:
a) eine Isolatorschicht (103), und optional
b) ein Hitzeschild (105), umgeben von der Isolatorschicht, wenn es vorliegt.

7. Verfahren nach Anspruch 1, wobei die Isolatorschicht (103) eine SiC Isolation umfasst.

8. Verfahren nach Anspruch 1, wobei das Hitzeschild (105) vorhanden ist und das Hitzeschild (105) umfasst:
i) ein schneckenförmig aufgerolltes Blech und optional
ii) Abstandshalter zwischen den Windungen des Blechs.

9. Verfahren nach Anspruch 1, wobei das Hitzeschild (105) vorhanden ist und das Hitzeschild (105) aus CMC oder Ceramic SiC oder einer Kombination daraus besteht.

10. Verfahren nach Anspruch 1, wobei die Umlenkvorrichtung (114) aus Ceramic SiC besteht.

11. Verfahren nach Anspruch 1, wobei der äußere Zylinder (112) aus Ceramic SiC besteht.

12. Verfahren nach Anspruch 1, wobei der innere Zylinder (113) aus Ceramic SiC besteht.

13. Verfahren nach Anspruch 1, wobei das Heizelement aus Ceramic SiC besteht.

14. Verfahren nach Anspruch 13, wobei das Heizelement die Form eines Lattenzauns aufweist.

15. Verfahren nach Anspruch 13, wobei das Heizelement aus einem monolithischen Stück Ceramic SiC hergestellt ist.

16. Verfahren nach einem der Ansprüche 1 bis 15, außerdem umfassend den Schritt:
Vorheizen des Gasgemisches in einem Wärmetauscher vor dem Durchleiten des Gasgemisches durch die Vorrichtung.

## Revendications

1. Procédé pour produire un produit comprenant du trichlorosilane, qui comprend :
le passage d'un mélange gazeux comportant de l'hydrogène et du tétrachlorosilane dans un appareil constitué de :
un réacteur (100) comprenant
i) une enveloppe pouvant être pressurisée (101).
ii) un isolateur thermique (102) entouré par l'enveloppe pouvant être pressurisée (101),
iii) un élément chauffant (106) entouré par l'isolateur thermique (102), et
iv) une chambre de réaction (107) entourée par l'élément chauffant (106), la chambre de réaction (107) comprenant
a) un déflecteur (114) formant le dessus de la chambre de réaction (107),
b) un cylindre extérieur (112) entouré par l'élément chauffant (106), et
c) un cylindre intérieur (113) entouré par le cylindre extérieur (112), et
d) une fixation (115) reliant le déflecteur (114) au cylindre extérieur (112) ;
la formation d'un chemin de circulation du gaz entre le cylindre extérieur (112) et le cylindre intérieur (113);
la réaction du mélange gazeux à une température élevée
dans une zone de réaction formée au centre du cylindre intérieur (113) ; et où au moins le cylindre extérieur (112), le cylindre intérieur (113), le déflecteur (114), ou la fixation (115) est constitué d'un matériau de construction sélectionné entre la céramique de carbure de silicium (SiC) et le carbure de silicium déposé en phase vapeur (SiC CVD).

2. Procédé selon la revendication 1, dans lequel le réacteur (100) comprend en outre une chambre extérieure (117) entre l'enveloppe pouvant être pressurisée (101) et l'isolateur thermique (102).

3. Procédé selon la revendication 1, dans lequel l'appareil comprend en outre un échangeur thermique (116), où le réacteur (100) est monté sur l'échangeur thermique (116).

4. Procédé selon la revendication 1, dans lequel l'appareil comprend en outre un échangeur thermique (116) comprenant un matériau de construction à base de carbure de silicium, où le réacteur est monté sur l'échangeur thermique (116).

5. Procédé selon la revendication 1, dans lequel l'appareil comprend en outre un échangeur thermique (116), où l'échangeur thermique est constitué de composite à matrice céramique (CMC), de céramique SiC, de SiC CVD, ou d'un matériau à base de SiC revêtu d'isolant SiC, et où le réacteur (100) est monté sur l'échangeur thermique (116).

6. Procédé selon la revendication 1, où l'isolateur thermique (102) comprend :
a) une couche d'isolation (103), et
facultativement b) un écran thermique (105) entouré par la couche d'isolation, le cas échéant.

7. Procédé selon la revendication 1, où la couche d'isolation (103) comprend une isolation de SiC.

8. Procédé selon la revendication 1, où l'écran thermique (105) est présent et comprend :
i) une feuille enroulée en spirale, et
facultativement ii) des entretoises entre les enroulements de la feuille.

9. Procédé selon la revendication 1, où l'écran thermique (105) est présent et est constitué de composite à matrice céramique (CMC) ou de céramique SiC, ou d'une combinaison des deux.

10. Procédé selon la revendication 1, où le déflecteur (114) est constitué de céramique SiC.

11. Procédé selon la revendication 1, où le cylindre extérieur (112) est constitué de céramique SiC.

12. Procédé selon la revendication 1, où le cylindre intérieur (113) est constitué de céramique SiC.

13. Procédé selon la revendication 1, où l'élément chauffant est constitué de céramique SiC.

14. Procédé selon la revendication 13, où l'élément chauffant est de conception en lattis.

15. Procédé selon la revendication 13, où l'élément chauffant est constitué d'une pièce monobloc de céramique SiC.

16. Procédé selon l'une quelconque des revendications 1 à 15, comprenant en outre le pré-chauffage du mélange gazeux dans un échangeur thermique avant son passage dans l'appareil.
